# EUROPEAN PATENT APPLICATION

(11) **EP 4 124 831 A1**
(43) Date of publication of application: **01.02.2023**
(21) Application number: 22178390.5
(22) Date of filing: 10.06.2022
(51) Int. Cl.: G01C 21/36, G08G 1/14

(54) **PARKING LOCATION GUIDANCE APPARATUS AND METHOD**

(30) Priority: 26.07.2021 KR 20210097666
(71) Applicant: Hyundai Mobis Co., Ltd., Gangnam-gu Seoul 06141 (KR)
(72) Inventor: CHO, Chang Ho, 16891 Yongin-si (KR)
(74) Representative: Frenkel, Matthias Alexander

(57) **Abstract**

A parking location guidance apparatus includes a vehicle detector that detects a vehicle entering a parking lot having a plurality of gates, a departure information reflecting device that reflects leaving time information and destination information of the vehicle, an exit-specific time reflecting device calculates a time required for the vehicle to exit for each gate based on the leaving time information and the destination information, and a parking location guidance device that selects, as a parking location, a location adjacent to an optimal gate, from among the gates, according to the time required for the vehicle to exit for each gate and transmits the parking location to the vehicle.

## Description

### CROSS-REFERENCE TO RELATED APPLICATION

This application claims the benefit of priority to Korean Patent Application No. 10-2021-0097666, filed in the Korean Intellectual Property Office on July 26, 2021, the entire contents of which are incorporated herein by reference.

### TECHNICAL FIELD

The present disclosure relates to a parking location guidance apparatus and method.

### BACKGROUND

As the supply of vehicles increases, large parking lots are installed and operated in facilities such as department stores, amusement parks, large marts, and complex shopping malls.

In addition, in the case of a large parking lot installed recently, information on the number of places in which a vehicle is capable of being parked for each specific floor or zone is provided, or information on whether an empty parking space exists in the specific parking zone is also provided.

However, there is a problem in that the conventional parking lot simply provides information on the number and existence of empty parking spaces, and cannot provide information on parking spaces that satisfy a preferred location or condition for each driver.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

The present disclosure has been made to solve the above-mentioned problems occurring in the prior art while advantages achieved by the prior art are maintained intact.

An aspect of the present disclosure provides a parking location guidance apparatus and a parking location guidance method capable of providing guidance for an optimal parking location considering a next route by using information on the next route (home, other set points) after the driver's parking when the vehicle enters a large parking lot with multiple exits.

The technical problems of the present disclosure are not limited to the aforementioned problems, and any other technical problems not mentioned herein will be clearly understood from the following description by those skilled in the art.

In one general aspect, a parking location guidance apparatus includes a vehicle detector that detects a vehicle entering a parking lot having a plurality of gates, a departure information reflecting device that reflects leaving time information and destination information of the vehicle, an exit-specific time reflecting device that calculates a time required for the vehicle to exit for each gate based on the leaving time information and the destination information, and a parking location guidance device that selects, as a parking location, a location adjacent to an optimal gate, from among the gates, according to the time required for the vehicle to exit for each gate and transmits the parking location to the vehicle.

The departure information reflecting device may include a leaving time reflecting device that reflects a leaving time of the vehicle based on the leaving time information input from the vehicle or past parking time information of the vehicle, and a destination reflecting device that reflects the destination information input from the vehicle or predetermined destination information based on the leaving time of the vehicle.

The departure information reflecting device may reflect the leaving time of the vehicle based on the past parking time information of the vehicle when there is no input of the leaving time information from a driver.

The departure information reflecting device may reflect the predetermined destination information based on the leaving time of the vehicle when there is no input of the destination information from a driver.

The exit-specific time reflecting device may reflect traffic condition information around each gate based on the leaving time information and the destination information.

In another general aspect, a parking location guidance method includes detecting a vehicle entering a parking lot having a plurality of gates, reflecting leaving time information and destination information of the vehicle, calculating a time required for the vehicle to exit for each gate based on the leaving time information and the destination information, and selecting, as a parking location, a location adjacent to an optimal gate. From among the gates, according to the time required for the vehicle to exit for each gate and transmit the parking location to the vehicle.

The reflecting of the leaving time information and the destination information of the vehicle may include reflecting a leaving time of the vehicle based on the leaving time information input from the vehicle or past parking time information of the vehicle, and reflecting the destination information input from the vehicle or predetermined destination information based on the leaving time of the vehicle.

The reflecting of the leaving time of the vehicle based on the leaving time information input from the vehicle or the past parking time information of the vehicle may include reflecting the leaving time of the vehicle based on the past parking time information of the vehicle when there is no input of the leaving time information from a driver.

The reflecting of the destination information input from the vehicle or predetermined destination information based on the leaving time of the vehicle may include reflecting the predetermined destination information based on the leaving time of the vehicle when there is no input of the destination information from a driver.

The calculating of the time required for the vehicle to exit for each gate based on the leaving time information and the destination information may include reflecting traffic condition information around each gate based on the leaving time information and the destination information.

The technical problems to be solved by the present disclosure are not limited to the aforementioned problems, and any other technical problems not mentioned herein will be clearly understood from the following description by those skilled in the art to which the present disclosure pertains.

Other features and aspects will be apparent from the following detailed description, the drawings, and the claims.

### BRIEF DESCRIPTION OF THE DRAWINGS

The above and other objects, features and advantages of the present disclosure will be more apparent from the following detailed description taken in conjunction with the accompanying drawings:
FIG. 1 is a view showing an example of a parking lot according to an embodiment of the present disclosure;
FIGS. 2 and 3 are views showing a parking location guidance apparatus according to an embodiment of the present disclosure; and
FIG. 4 is a flowchart for describing a parking location guidance method according to an embodiment of the present disclosure.

### DETAILED DESCRIPTION

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope and spirit of the disclosure.

Various embodiments of the disclosure and terms used herein are not intended to limit the technologies described in the disclosure to specific embodiments, and it should be understood that the embodiments include modification, equivalent, and/or alternative on the corresponding embodiments described herein.

With regard to description of drawings, similar components may be marked by similar reference numerals. The singular form of noun corresponding to an item may include one or more of the item, unless a relevant context clearly dictates otherwise.

In the disclosure, the expressions "A or B", "at least one of A and B", "at least one of A or B", "A, B, or C", "at least one of A, B, and C", or "at least one of A, B, or C" each may include any one of, or all possible combinations of, items listed together with the corresponding one of the expressions.

Terms such as "first" or "second" may simply be used to distinguish an element from another element, and do not limit the elements in another aspect (e.g., importance or order). When it is referenced that one (e.g., first) element is "coupled" or "connected" to another (e.g., second) element, with or without the terms "functionally" or "communicatively", it means that one element can be connected to the other element directly (e.g., by wire), wirelessly, or through a third element.

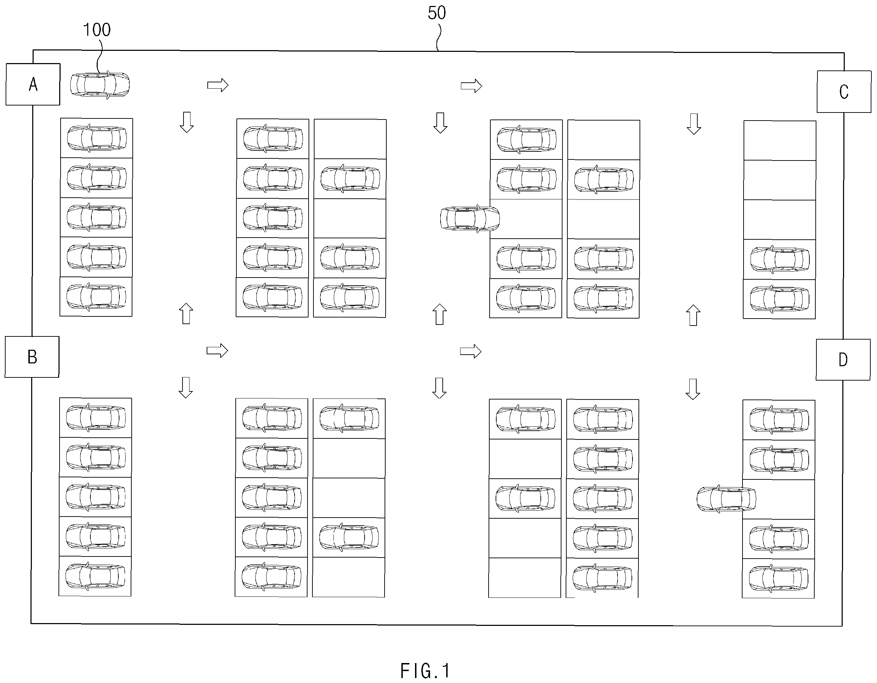

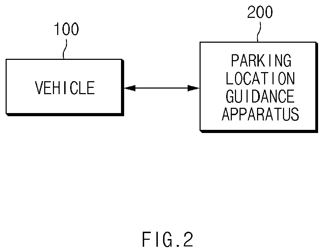

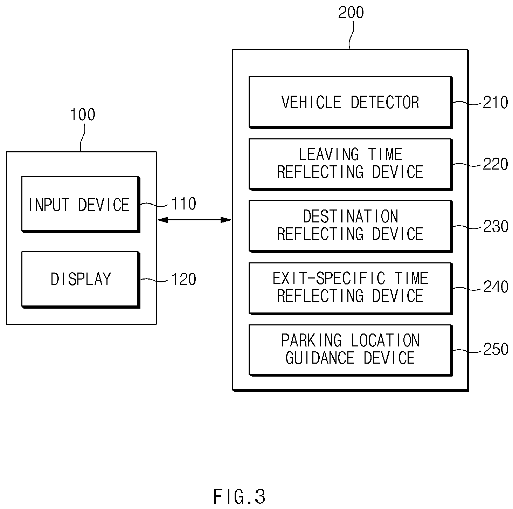

FIG. 1 is a view showing an example of a parking lot according to an embodiment of the present disclosure, and FIGS. 2 and 3 are views showing a parking location guidance apparatus according to an embodiment of the present disclosure.

Referring to FIGS. 1 and 2, a parking location guidance apparatus 200 according to an embodiment of the present disclosure may control a parking lot 50 provided with a plurality of gates "A", "B", "C", and "D".

The parking location guidance apparatus 200 may be installed in the parking lot 50 provided with a plurality of gates such as a department store parking lot, an apartment parking lot, a mart parking lot, a public institution parking lot, or the like to manage parking and exiting of a vehicle 100 entering and exiting the parking lot 50.

The parking location guidance apparatus 200 may communicate with the vehicle 100 through a wireless communication network using mobile communication such as wireless Internet, short-range communication, 4G or 5G, or the like, and receive information on a route to drive after exiting the parking lot, such as a leaving time, destination information, from the vehicle 100, and transmit information on a parking lot map information, a location to park, and the like to the vehicle 100.

When the vehicle 100 enters the parking lot 50, the parking location guidance apparatus 200 may select to a location adjacent to an optimal gate of a plurality of gates by taking into account the information on the route to drive when the vehicle 100 exits the parking lot 50 after parking, and transfer the location for the vehicle to park to the vehicle 100.

Referring to FIG. 3, the vehicle 100 may include an input device 110 and a display 120.

The input device 110 may enable input of options such as data input and control commands from a driver, and may receive and transmit information on the route to drive when exiting after parking, such as a leaving time and destination information, to the parking location guidance apparatus 200. In this case, the current location information of the vehicle may also be transmitted to the parking location guidance apparatus 200.

The input device 110 may include a voice input device, a touch input device, or a mechanical input device.

The voice input device may include a microphone capable of converting the driver's voice input into an electrical signal. The touch input device may convert the driver's touch input into an electrical signal, and may include a touch sensor for detecting the driver's touch input, and may be formed integrally with the display 120 to be implemented in the form of a touch screen. The mechanical input device may include a button, a dome switch, a jog wheel, a jog switch, or the like.

The display 120 may receive and display map information of the parking lot 50, parking location information or the like from the parking location guidance apparatus 200.

When receiving the parking location information, the display 120 may display a driving trajectory for moving from the current location through the display 120 to the parking location by combining GPS (not shown), map information of the parking lot, and sensor values of various sensors provided in the vehicle 100.

The parking location guidance apparatus 200 may include a vehicle detector 210, a leaving time reflecting device 220, a destination reflecting device 230, an exit-specific time reflecting device 240, and a parking location guidance device 250.

The vehicle detector 210 may be installed at an gate of the parking lot 50 provided with a plurality of gates to detect the vehicle 100 entering the parking lot 50 or exiting the parking lot 50 to the outside. The vehicle detector 210 may include one or more sensors among sensors such as a radar sensor, a lidar sensor, an ultrasonic sensor, and a camera.

The leaving time reflecting device 220 may reflect a leaving time input from the vehicle 100 or reflect the leaving time of the vehicle 100 based on a past parking time information of the vehicle 100.

That is, when the driver inputs an expected leaving time after the vehicle 100 enters the parking lot 50, the leaving time reflecting device 220 may receive and reflect the leaving time input by the driver and reflect an expected leaving time of the vehicle 100 based on the past parking time information when the driver does not input the expected leaving time.

The past parking time information is an average leaving time when the vehicle 100 has used and exited the parking lot 50 at least once in the past and when the average leaving time is stored in the parking location guidance apparatus 200, the past parking time information may be reflected.

The destination reflecting device 230 may reflect destination information input from the vehicle 100 or predetermined destination information based on the leaving time of the vehicle 100.

That is, when the vehicle 100 enters the parking lot 50 and the driver inputs destination information after exiting the parking lot 50, the destination information input by the driver may be received and reflected, and when the driver does not input the destination information after exiting the parking lot 50, the destination information may be reflected based on an expected leaving time reflected previously.

For example, when the expected leaving time is in the daytime, a preset company may be reflected as the destination information, and when the expected leaving time is in the evening, a preset home may be reflected as the destination information. Alternatively, when the destination information based on a corresponding leaving time in the case of the vehicle 100 having used and exited the parking lot 50 at least once in the past is stored in the parking location guidance apparatus 200, the destination information may be reflected as the destination information.

The exit-specific time reflecting device 240 may calculate a time required for the vehicle to exit for each gate based on the leaving time information reflected in the leaving time reflecting device 220 and the destination information reflected in the destination reflecting device 230.

For example, when the gates of the parking lot 50 include gate "A", gate "B", gate "C", and gate "D", a time required to drive from each gate to the destination reflected in the destination reflecting device 230 at the leaving time reflected in the leaving time reflecting device 220.

Therefore, a time required to move from gate "A" to a predetermined destination at an expected leaving time, a time required to move from gate "B" to the predetermined destination at the expected leaving time, a time required to move from gate "C" to the predetermined destination at the expected leaving time, and a time required to move from gate "D" to the predetermined destination at the expected leaving time may be calculated, respectively.

In this case, the exit-specific time reflecting device 240 may calculate the time to move to the destination by reflecting traffic condition information around each gate based on the leaving time information.

For example, the exit-specific time reflecting device 240 may reflect the time required to move from the gate to the destination by reflecting a situation in which the leaving time reflected in the leaving time reflecting device 220 is in the evening rush hour, and the traffic may be congested.

Therefore, it was calculated that it normally takes about 1 hour from gate "A" to the predetermined destination, but when the traffic is congested, it may be calculated that it takes about 2 hours from gate "A" to the predetermined destination.

The parking location guidance device 250 may select an optimal gate based on a time for vehicle to exit for each gate, select a parking location adjacent to the corresponding gate, and transmit it to the vehicle 100.

For example, when it takes 1 hour to move from gate "A" to the predetermined destination at the expected leaving time, it takes 1 hour and 30 minutes to move from gate "B" to the predetermined destination at the expected leaving time, it takes 2 hours to move from gate "C" to the expected leaving time, and it takes 2 hours and 30 minutes to move from gate "D" to the predetermined destination at the expected leaving time, the time required to move from gate "A" to the predetermined destination at the expected leaving time is the shortest time. Therefore, gate "A" may be selected and an empty space of parking spaces adjacent to gate "A" may be selected as a parking location and transmitted to the vehicle 100.

The parking location guidance device 250 may collect status information (empty, parked, or the like) of a parking space through a sensor installed in each parking space, and identify a parking location where parking is possible in the parking lot.

On the other hand, normally, it takes the shortest time to move from gate "A" to the predetermined destination, but when the expected leaving time is in a time range when traffic may be congested, it is longer than the time required to move from another gate to the predetermined destination due to traffic congestion.

In this case, normally, the time required to move to the predetermined destination is relatively longer than the time required to move from the gate "A" to the predetermined destination, but during times when traffic may be congested, it is possible to select the gate B, the gate C, or the gate D, in which the time required to move to the predetermined destination are taken relatively less, and select and transmit a parking location adjacent to the corresponding gate to the vehicle 100.

In addition, when transmitting the selected parking location to the vehicle 100, the parking location guidance device 250 may generate and transmit a driving trajectory from the current location of the vehicle 100 to the parking location for the vehicle to be parked.

The driving trajectory may be mapped to the map information of the parking lot and displayed through the display 120 of the vehicle 100.

In addition, although not shown in the drawings, according to embodiments, the parking location guidance apparatus 200 may further include a controller and storage.

The controller may control at least one other component (e.g., a hardware or software component) of the parking location guidance apparatus 200 and may perform various data processing or operations.

According to an embodiment, as at least part of data processing or operation, the controller may store a command or data received from another component (e.g., a sensor) in a volatile memory, processes the command or data stored in the volatile memory, and store result data in a non-volatile memory.

According to an embodiment, the controller may include a main processor (e.g., a central processing unit or an application processor) or an auxiliary processor (e.g., a graphic processing unit, an image signal processor, a sensor hub processor, or a communication processor) that may be operated independently or together with the main processor. For example, when the controller includes a main processor and an auxiliary processor, the auxiliary processor may be set to use less power than the main processor or to be specialized for a specified function. The auxiliary processor may be implemented separately from or as part of the main processor.

The storage may store a command for controlling the parking location guidance apparatus 200, a control command code, control data, or user data. For example, the storage may include at least one of an application program, an operating system (OS), middleware, and a device driver.

The storage may include one or more of volatile memory and non-volatile memory.

The volatile memory may include dynamic random access memory (DRAM), static RAM (SRAM), synchronous DRAM (SDRAM), phase-change RAM (PRAM), magnetic RAM (MRAM), resistive RAM (RRAM), ferroelectric RAM (FeRAM) or the like.

The nonvolatile memory may include a read only memory (ROM), a programmable ROM (PROM), an electrically programmable ROM (EPROM), an electrically erasable programmable ROM (EEPROM), a flash memory, and the like.

The storage may further include a nonvolatile medium such as a hard disk drive (HDD), a solid state disk (SSD), an embedded multimedia card (eMMC), and a universal flash storage (UFS).

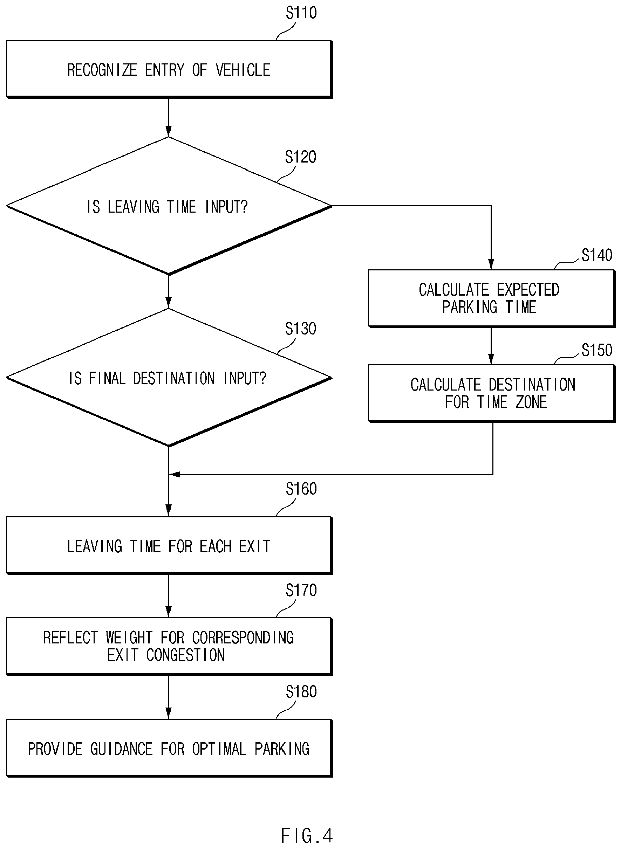

Hereinafter, a parking location guidance method according to another embodiment of the present disclosure will be described in detail with reference to FIG. 4.

FIG. 4 is a flowchart for describing a parking location guidance method according to an embodiment of the present disclosure.

Hereinafter, it is assumed that the parking location guidance apparatus of FIG. 2 performs the process of FIG. 4.

First, the vehicle 100 entering the parking lot 50 provided with a plurality of gates may be detected (S110).

Next, vehicle leaving time information input from the vehicle 100 may be received (S120), and destination information inputted from the vehicle 100 may be received (S130).

When there is no input of leaving time information from the vehicle 100, the leaving time of the vehicle 100 may be reflected based on the past parking time information of the vehicle 100 (S140), and when there is no input of destination information, predetermined destination information based on the leaving time of the vehicle 100 may be reflected (S150).

Then, the time required for the vehicle to exit for each gate may be calculated based on the information on the leaving time and the destination information (S160).

In this case, traffic condition information around each gate may be reflected based on the leaving time information and the destination information (S170).

Subsequently, a parking location adjacent to an optimal gate according to the time required for the vehicle to exit for each gate may be selected and transmitted to the vehicle 100 (S180).

Various embodiments of the present specification may be implemented as software (e.g., a program) including one or more instructions stored in a storage medium (e.g., internal memory or external memory) readable by a machine. For example, the machine may call at least one of the one or more instructions stored from the storage medium and execute the at least one instruction. This makes it possible for the machine to be operated to perform at least one function according to the called at least one instruction. The one or more instructions may include codes generated by a compiler or codes executable by an interpreter.

The machine-readable storage medium may be provided in the form of a non-transitory storage medium. Here, 'non-transitory' only means that the storage medium is a tangible device and does not include a signal (e.g., electromagnetic wave), and this term corresponds to both a case where data is semi-permanently stored in a storage medium and a case where data is temporarily stored in the storage medium.

According to an embodiment, a method according to various embodiments disclosed in the disclosure may be included in a computer program product. The computer program product may be traded between a seller and a buyer as a product. The computer program product is distributed in the form of a machine-readable storage medium (e.g., compact disc read only memory (CD-ROM)), or distributed (e.g., downloaded or uploaded) online via an application store or directly between two user devices. In the case of online distribution, at least a part of the computer program product may be temporarily generated or at least temporarily stored in a storage medium, such as a memory of a manufacturer's server, an application store's server, or a relay server.

According to various embodiments, each component (e.g., module or program) of the above-described components may include a singular or a plurality of entities, and some of the plurality of entities may be separately disposed in other components.

According to various embodiments, one or more components or operations among the above-described corresponding components may be omitted, or one or more other components or operations may be added.

Alternatively or additionally, a plurality of components (e.g., a module or a program) may be integrated into one component. In this case, the integrated component may perform one or more functions of each component of the plurality of components identically or similarly to those performed by the corresponding component among the plurality of components prior to the integration.

According to various embodiments, operations performed by a module, program, or other component are executed sequentially, in parallel, repetitively, or heuristically, or one or more of the operations are executed in a different order, omitted, or one or more other operations may be added.

The above description is merely illustrative of the technical idea of the present disclosure, and various modifications and variations may be made without departing from the essential characteristics of the present disclosure by those skilled in the art to which the present disclosure pertains.

Accordingly, the embodiment disclosed in the present disclosure is not intended to limit the technical idea of the present disclosure but to describe the present disclosure, and the scope of the technical idea of the present disclosure is not limited by the embodiment. The scope of protection of the present disclosure should be interpreted by the following claims, and all technical ideas within the scope equivalent thereto should be construed as being included in the scope of the present disclosure.

According to the present disclosure, when a vehicle enters a large parking lot with multiple exits, it is possible to guide the optimal parking location considering a next route by using information on the next route (home, other set points) after the driver's parking to allow the driver to park the vehicle near the optimal exit by reflecting the average traffic condition information for each exit at the expected leaving time, or park near the optimal exit for the next destination at the expected leaving time when guiding the parking location after entering the parking lot, thus enabling quick exit of the vehicle.

In addition, various effects may be provided that are directly or indirectly understood through the disclosure.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

## Claims

1. A parking location guidance apparatus, comprising:
a vehicle detector configured to detect a vehicle entering a parking lot having a plurality of gates;
a departure information reflecting device configured to reflect leaving time information and destination information of the vehicle;
an exit-specific time reflecting device configured to calculate a time required for the vehicle to exit for each gate based on the leaving time information and the destination information; and
a parking location guidance device configured to select, as a parking location, a location adjacent to an optimal gate, from among the gates, according to the time required for the vehicle to exit for each gate and to transmit the parking location to the vehicle.

2. The parking location guidance apparatus of claim 1, wherein the departure information reflecting device comprises:
a leaving time reflecting device configured to reflect a leaving time of the vehicle based on the leaving time information input from the vehicle or past parking time information of the vehicle; and
a destination reflecting device configured to reflect the destination information input from the vehicle or predetermined destination information based on the leaving time of the vehicle.

3. The parking location guidance apparatus of claim 2, wherein the departure information reflecting device is configured to reflect the leaving time of the vehicle based on the past parking time information of the vehicle when there is no input of the leaving time information from a driver.

4. The parking location guidance apparatus of claim 2 or 3, wherein the departure information reflecting device is configured to reflect the predetermined destination information based on the leaving time of the vehicle when there is no input of the destination information from a driver.

5. The parking location guidance apparatus of any one of claims 2 to 4, wherein the exit-specific time reflecting device is configured to reflect traffic condition information around each gate based on the leaving time information and the destination information.

6. A parking location guidance method, comprising:
detecting a vehicle entering a parking lot having a plurality of gates;
reflecting leaving time information and destination information of the vehicle;
calculating a time required for the vehicle to exit for each gate based on the leaving time information and the destination information; and
selecting, as a parking location, a location adjacent to an optimal gate, from among the gates, according to the time required for the vehicle to exit for each gate and transmitting the parking location to the vehicle.

7. The parking location guidance method of claim 6, wherein the reflecting of the leaving time information and the destination information of the vehicle includes
reflecting a leaving time of the vehicle based on the leaving time information input from the vehicle or past parking time information of the vehicle; and
reflecting the destination information input from the vehicle or predetermined destination information based on the leaving time of the vehicle.

8. The parking location guidance method of claim 7, wherein the reflecting of the leaving time of the vehicle based on the leaving time information input from the vehicle or the past parking time information of the vehicle includes reflecting the leaving time of the vehicle based on the past parking time information of the vehicle when there is no input of the leaving time information from a driver.

9. The parking location guidance method of claim 7 or 8, wherein the reflecting of the destination information input from the vehicle or predetermined destination information based on the leaving time of the vehicle includes reflecting the predetermined destination information based on the leaving time of the vehicle when there is no input of the destination information from a driver.

10. The parking location guidance method of any one of claims 6 to 9, wherein the calculating of the time required for the vehicle to exit for each gate based on the leaving time information and the destination information includes reflecting traffic condition information around each gate based on the leaving time information and the destination information.
